(19) Europäisches Patentamt / European Patent Office / Office européen des brevets

(11) **EP 2 644 079 B1**

(12) **EUROPEAN PATENT SPECIFICATION**

(45) Date of publication and mention of the grant of the patent:
**06.07.2016 Bulletin 2016/27**

(51) Int Cl.:
*A47L 15/42* (2006.01)   *A47L 15/00* (2006.01)
*D06F 39/00* (2006.01)   *G01N 21/00* (2006.01)

(21) Application number: **12162613.9**

(22) Date of filing: **30.03.2012**

(54) **METHOD OF AND DEVICE FOR DETECTING DETERGENT IN THE PROCESS WATER OF A HOUSEHOLD APPLIANCE BY ANALYSING THE TURBIDITY OF THE PROCESS WATER**

VERFAHREN UND VORRICHTUNG ZUM ERFASSEN VON REINIGUNGSMITTEL IM PROZESSWASSER EINER HAUSHALTSMASCHINE DURCH ANALYSIEREN DER TRÜBUNG DES PROZESSWASSERS

PROCÉDÉ ET DISPOSITIF DE DÉTECTION DE DÉTERGENT DANS L'EAU DE TRAITEMENT D'UN APPAREIL ÉLECTROMÉNAGER EN ANALYSANT LA TURBIDITÉ DE L'EAU DE TRAITEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2013 Bulletin 2013/40**

(73) Proprietor: **Electrolux Home Products Corporation N.V.**
**1130 Brussels (BE)**

(72) Inventors:
• **Dreossi, Giuseppe**
**10545 Stockholm (SE)**
• **Lindmark, Elianne**
**105 45 Stockholm (SE)**

(74) Representative: **Samzelius, Roger Mikael**
**AB Electrolux**
**Group Intellectual Property**
**105 45 Stockholm (SE)**

(56) References cited:
EP-A1- 1 707 663   EP-A1- 2 206 457
EP-A2- 2 397 062   DE-A1- 10 356 279
DE-A1- 19 745 428   DE-A1-102007 034 662
JP-A- 5 345 094   US-B1- 8 038 802

**Description**

**TECHNICAL FIELD**

The invention relates to a method of, and device for, detecting detergent present in process water in a household appliance for washing and rinsing goods.

**BACKGROUND**

Dishwashers and washing machines are household appliances for automatically washing articles such as for instance plates, glasses or cutlery in case of a dishwasher, and sheets, clothes or other garments in case of a washing machine. In order to perform washing of the articles contained in the household appliance, a detergent is introduced into a detergent container or receptacle before washing commences and water is supplied to the appliance. The detergent may be of different types, such as powder, liquid, gel or tablets. In various applications, it may be desirable to distinguish between different types of detergent used in the household appliance.

EP 2 206 457 discloses use of a turbidity sensor to detect the presence and the type of detergent added to a wash cycle in a dishwasher at least for a short time subsequent to detergent release to avoid starting a washing cycle without detergent. By means of monitoring turbidity, it can be determined whether no detergent is used, detergent with polymers is used or detergent without polymers is used.

**SUMMARY**

An object of the present invention is thus to provide an improved method and device for detecting detergent used in a household appliance such as a dishwasher or a washing machine.

This object is attained according to a first aspect of the present invention by a method of detecting detergent present in process water in a household appliance for washing and rinsing goods. The method comprises the steps of measuring turbidity of the process water, the measured turbidity signal indicating the presence of detergent in the process water, and determining noise level of the measured turbidity signal, which noise level indicates type of detergent present in the process water.

DE 10356 279 A1 discloses a method of detecting detergent present in process water in a household appliance, the method comprising the step of measuring turbidity of the process water, and determining the noise level of the measured turbidity signal.

DE 197 45 428 A1 discloses a process water analysis method, which method is based on the noise levels in turbidity measurements.

This object is attained according to a second aspect of the present invention by a device for detecting detergent present in process water in a household appliance for washing and rinsing goods. The device comprises a turbidity sensor arranged to measure turbidity of the process water, the measured turbidity signal indicating the presence of detergent in the process water. The device further comprises a processor communicatively connected to the turbidity sensor, which processor is arranged to determine noise level of the measured turbidity signal, which noise level indicates type of detergent present in the process water.

Field tests have shown that detection of the particular type of detergent used in a household appliance for washing and rinsing goods, i.e. whether distinction can be made between liquid/gel or tablet/powder detergent disposed in water for washing the goods, is difficult by means of analyzing the measured level of turbidity, which typically is measured by a turbidity sensor. Advantageously, to this end, by measuring the turbidity of the water and subsequently analysing the measured turbidity to determine noise levels in the measured turbidity signal output from the turbidity sensor, it has shown to be possible to distinguish between liquid/gel detergent on the one hand and tablet/powder detergent on the other.

In the following, the household appliance in the context of which the present invention is discussed is exemplified in the form of a dishwasher.

In an embodiment of the present invention, the turbidity of the process water is measured during a predetermined time period subsequent to an expected release of detergent into the process water. Advantageously, point of detergent release is known for any given washing cycle in dishwashing machines and, furthermore, that the turbidity of the process water contained in the dishwasher is a reliable indication of the presence of detergent at least for a certain time period subsequent to the detergent release. Within this predetermined time period, little or no soil is dissolved in the dishwashing water. Consequently, the initial increase in turbidity of the dish-washing water is only, or at least for the major part, due to the presence of released detergent particles. If detergent should be missing, there will be little or no turbidity during this relatively short time period.

Determination of noise level of the measured turbidity signal comprises determining momentary turbidity value and average turbidity value of the process water over a specified time period. The noise level is thus calculated as a difference value between the momentary turbidity value and average turbidity value over the specified time period.

In yet a further embodiment, the calculated noise level is compared to one or more threshold values to determine the type of detergent present in the process water; a particular type of detergent corresponds to a particular noise threshold value.

In still another embodiment, the amount of detergent in the process water is further measured. Then, it is determined whether quality of the process water is adequate on the basis of the measured amount of detergent in the process water and the type of detergent used. If the quality of the process water is determined to be adequate, at least a part of the process water is stored for re-use in a following program cycle in the dishwasher.

This embodiment is particularly advantageous in that it further solves the problem of how to reduce water consumption by means of process water re-use in a dishwasher. However, there are some typical problems associated with the storage of water containing at least some organic residues such as bad smell, tank fouling and hydraulic components clogging, bacteria proliferation and hygienic issues. In other proposed solutions these problems have been addressed with more or less advanced purification and/or disinfection treatments, e.g. filtration, UV or ozone treatments, for the reduction or prevention of the fouling problems. An acceptable or good quality of the process water can be attained if the bacteria growth over time is low.

To save water, it would be preferred to store process water in the dishwasher from one cycle to the next. However, to safely store (say for a maximum of 48 hours) more or less soiled process water in a dishwater tank, the water needs to be treated in order to prevent bacterial growth. It can be concluded that detergent in the water slows down the bacterial growth. Investigations show that detergents that are safe to use are powder and tablet detergent, while liquid/gel detergent is not safe to use, because there is no bleach in liquid/gel detergent which prohibits the bacterial growth in the process water. Thus, in order to apply re-use of process water in a dishwasher (or washing machine) it is important to able to distinguish between liquid/gel detergent on the one hand and tablet/powder detergent on the other, as advantageously is facilitated by the present invention.

By the expression "process water" as used herein, is meant a liquid containing mainly water that is used in and circulates in a water consuming household appliance for washing and rinsing goods. The process water is water that may contain detergent and/or rinse aid in a varying amount. The process water may also contain soil, such as food debris or other types of solid particles, as well as dissolved liquids or compounds. Process water used in a main wash cycle is sometimes referred to as the wash liquid. Process water used in a rinse cycle is sometimes referred to as cold rinse or hot rinse depending on the temperature in the rinse cycle.

By the expression "quality of the process water" as used herein, is meant an indication of to what degree bacteria growth may take place in the process water. The probability of bacteria growth in the process water depends on several different parameters. The quality of the process water may be determined by measuring and/or determining one or more of such parameters that influence the quality of the process water, such as the type of detergent used, the amount of detergent dosed, the amount of residual detergent, the presence of rinse aid and the amount of soil, etc.

It is noted that the invention relates to all possible combinations of features recited in the claims. Further features of, and advantages with, the present invention will become apparent when studying the appended claims and the following description. Those skilled in the art realize that different features of the present invention can be combined to create embodiments other than those described in the following.

## BRIEF DESCRIPTION OF THE DRAWINGS

The invention is now described, by way of example, with reference to the accompanying drawings, in which:

Figure 1 illustrates a detergent detector in accordance with an exemplary embodiment of the present invention;

Figure 2a shows experimental tests of tablet detergent dissolved in clean water;

Figure 2b shows experimental tests of powder detergent dissolved in clean water;

Figure 2c shows experimental tests of liquid detergent dissolved in clean water;

Figure 3a shows a flowchart illustrating a method of detecting detergent present in process water in a household appliance according to an embodiment of the present invention;

Figure 3b shows a flowchart illustrating a method of detecting detergent present in process water in a household appliance according to another embodiment of the present invention;

Figure 4 illustrates a dishwasher implementing the detergent detector of the present invention for the purpose of reusing process water; and

Figure 5 shows a flowchart illustrating a method of detecting detergent present in process water in a household appliance for the purpose of reusing process water according to an embodiment of the present invention.

## DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. In the following, a turbidity sensor is described as the element for detecting type of detergent in process water of a dishwasher according to embodiments of the present invention. However, it should be noted that a conductivity sensor could be used for the same purpose.

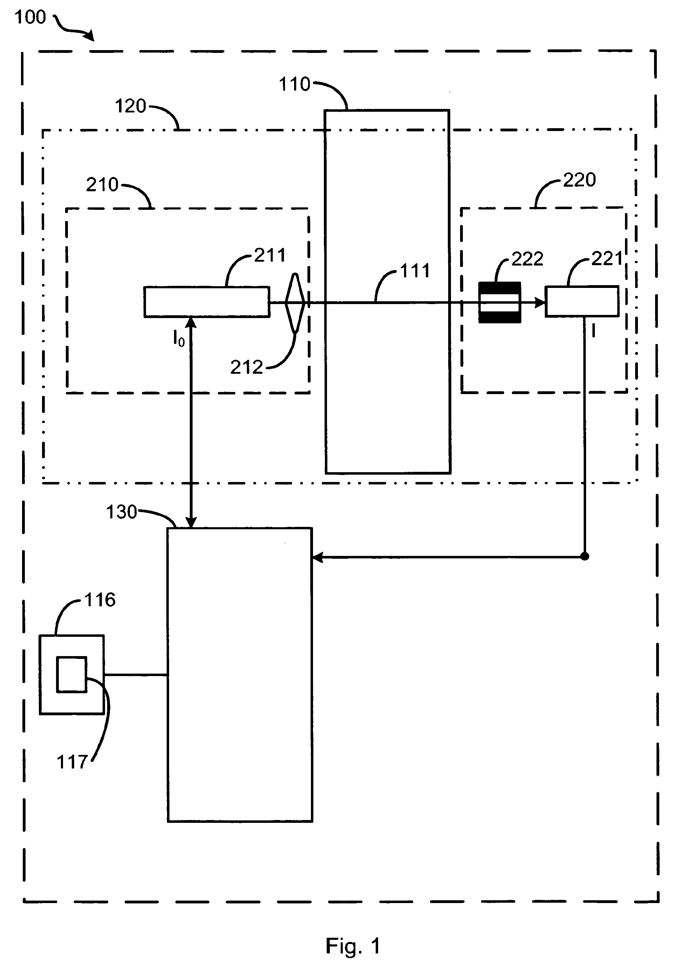

Figure 1 illustrates a detergent detector 100 in accordance with an exemplary embodiment of the present invention, which advantageously can be used for detecting detergent according to embodiments of the present invention. The detergent detector 100 according to this exemplary embodiment, which is represented in the form of a block diagram, comprises a turbidity sensor 120 for measuring the turbidity of a fluid 110 typically flowing in a transparent tube. The fluid will in the following be referred to as process water. Furthermore, in the disclosed embodiment the detergent detector 100 comprises a data processing unit or processor 130 communicatively coupled to the turbidity sensor 120. In the disclosed embodiment, the turbidity sensor 120 comprises a light-emitting portion 210 and a light-receiving portion 220. The light-emitting portion 210 and the light-receiving portion 220 are positioned such that light emitted by the former at least for the most part can propagate through the fluid 110 to reach the latter. In the disclosed embodiment, the light-emitting portion 210 comprises a light source 211, such as a light emitting diode (LED) and a focusing lens 212. The focusing lens 212 may serve as a relatively simple means for collecting the light beams emitted by the light source 211. The light emitted by the light source 211 at a radiant intensity $I_0$ propagates along an optical path 111, a portion of which intersects the process water 110, and is eventually received by the light-receiving portion 220. Along the optical path 111, optical attenuation and scattering may occur, which may be a result of detergent dissolved in the process water 110. Thus, the light beam exits the process water 110 with intensity I, which typically is comparatively lower than the radiant intensity $I_0$ of the emitted light.

To detect the emitted light, the light-receiving portion 220 comprises a light-sensitive element 221such as a phototransistor, a photodiode or a photoresistor. To prevent rescattered light from exciting the light-sensitive element 221, it may be preceded by a collimator 222 or a similar device. A signal that encodes the radiant intensity of the received light I can then be provided to the processor 130. As can be seen in Figure 1, the processor 130 receives the two signals indicative of the radiant intensities of the emitted and received light; I and $I_0$, respectively, and provides, on the basis of these two signals, a signal indicative of the turbidity of the process water 110. In practice, transmittance of the process water 110 is calculated by comparing the radiant intensity (radiated power per unit solid angle) $I_0$ of the emitted light and the radiant intensity I of the received light using the by calculating $I/I_0$. The turbidity generally refers to concentration of light-scattering or light-absorbing particles suspended in the process water 110. If turbidity increases in the process water 110 then, for a given wavelength, the transmittance generally decreases in dependence of, e.g.: the diameter distribution of the suspended particles, the refractive index of the suspended particles, and the surface properties of the suspended particles. Thus, the transmittance is indicative of the turbidity of the process water 110 via an empirical transmittance-turbidity curve. Thus, a momentary turbidity value can be output from the processor 130.

Now, in embodiments of the present invention, the processor is configured to analyse noise level of the measured turbidity signal and on the basis of the analysed noise level determine which type of detergent is dissolved in the process water.

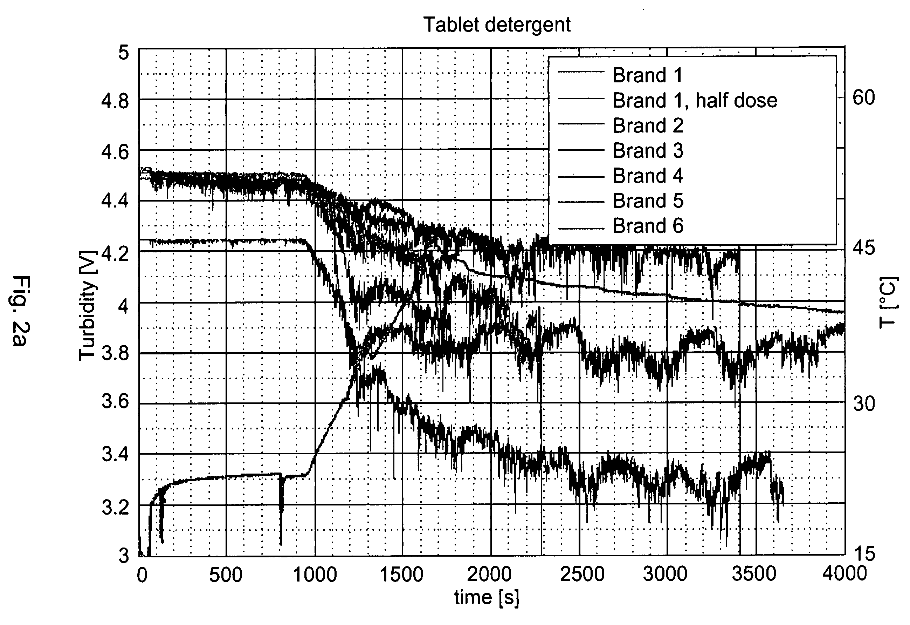

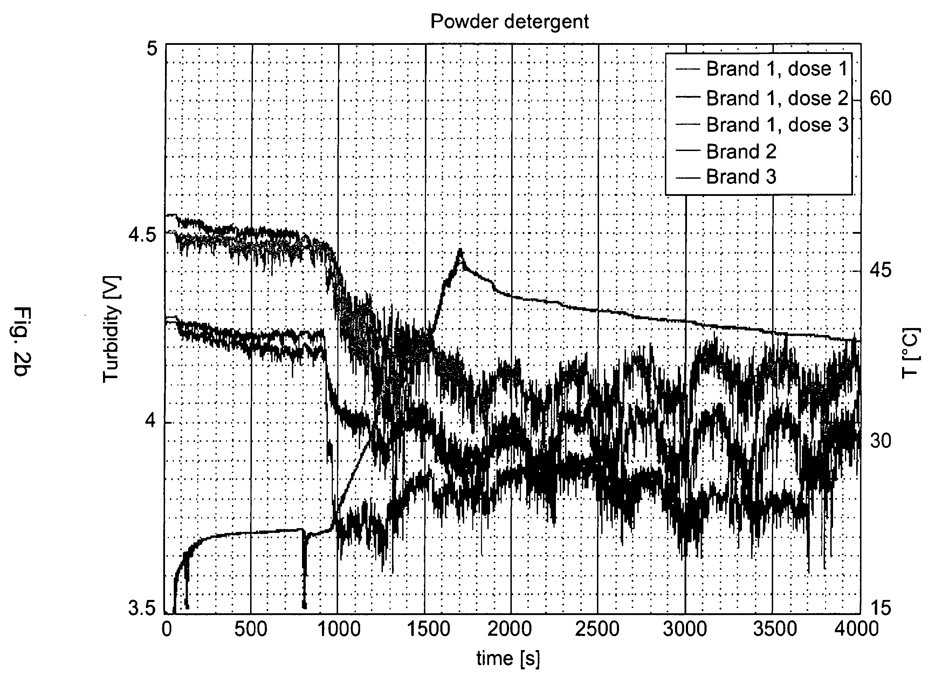

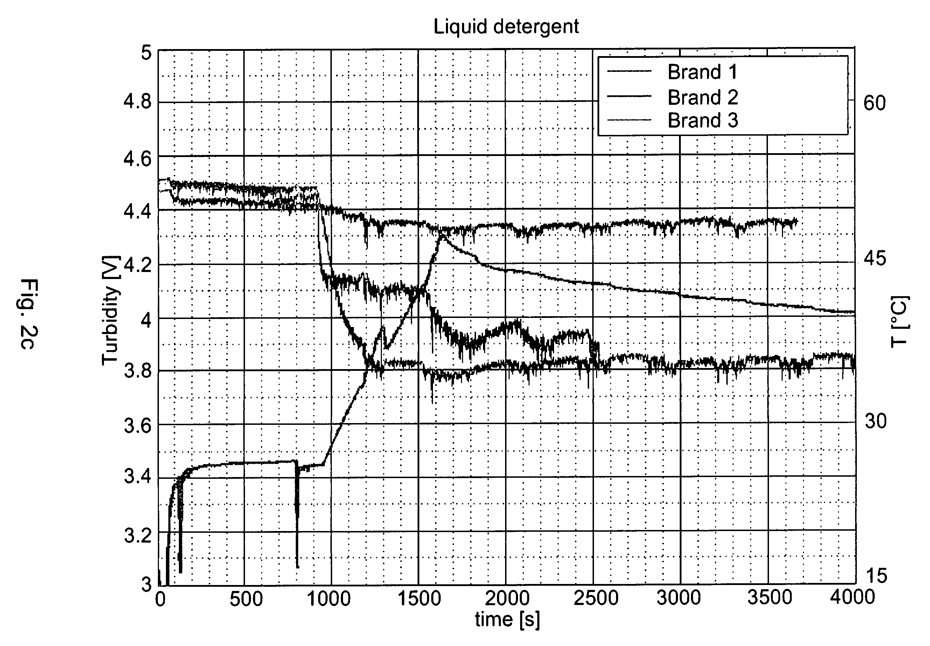

Reference is made to Figure 2a, which shows experimental tests of tablet detergent of a plurality of different brands or doses dissolved in clean water over time. First, a prewash with no detergent is performed. After approximately 800 seconds, main wash commences. Detergent is released after roughly another 100 seconds. Turbidity is shown on the left-hand vertical axis, while temperature of the process water is shown on the right-hand vertical axis. Further, Figure 2b shows powder detergent of a plurality of different brands or doses dissolved in clean water over time. Finally, Figure 2c shows liquid detergent of a plurality of different brands dissolved in clean water over time. As can be concluded from these experimental tests, regardless of which type of detergent being used, be it liquid, powder or tablets, the turbidity appears to take on a value in the range of 3.5-4.5V (calibrated to give 4.5 V in clean water in this particular test). It is thus difficult from the turbidity value itself to determine which type of detergent is used.

However, it can be seen in Figures 2a and b that the noise level of the turbidity signal is higher than that illustrated in Figure 2c. In an embodiment of the present invention, the noise level of the turbidity signal is calculated as:

$$\text{Noise level} = \frac{1}{T} \sum_{i=t-\frac{T}{2}}^{i=t+\frac{T}{2}} |U_{turb}(i) - \bar{U}_{turb}(i)|,$$

where $\bar{U}_{turb}$ is a running average of the turbidity signal calculated as:

$$\bar{U}_{turb}(t) = \frac{1}{T} \sum_{i=t-\frac{T}{2}}^{i=t+\frac{T}{2}} U_{turb}(i),$$

for an appropriately selected time period T.

Thus, by having the processor 130 calculate the noise level of the respective turbidity signal illustrated in Figures 2a-c in accordance with embodiments of the present invention and optionally compare the noise level to one or more noise threshold values, it can be determined on the one hand whether tablets or powder is used (resulting in a higher noise value) or on the other hand whether liquid detergent is used (resulting in a lower noise value). This information may be transferred to other components in the household appliance for further action to be taken.

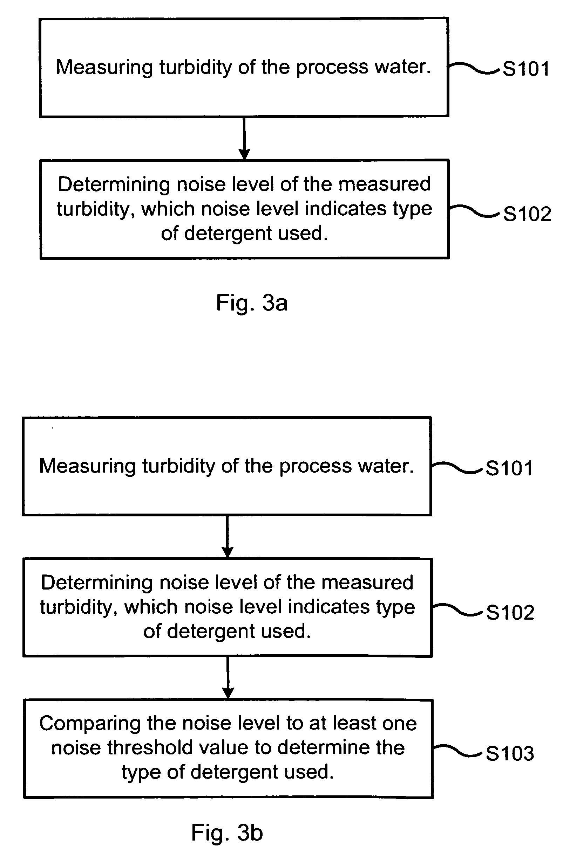

Figure 3a shows a flowchart illustrating a method of detecting detergent present in process water in a household appliance such as a dishwasher according to an embodiment of the present invention. In a first step S101, the turbidity sensor 120 measures turbidity of the process water. In practice, timing of various measurements is controlled by the processor 130 which is communicatively connected to the turbidity sensor 120, and thus has the capacity to control emission of the light source 211. The measured turbidity indicates the presence of detergent in the process water. Thereafter, in step S102, the processor 130 determines noise level of the measured turbidity signal. The determined noise level advantageously indicates type of detergent present in the process water, as has been illustrated in Figures 2a-c.

Figure 3b shows a flowchart illustrating a method of detecting detergent present in process water in a household appliance such as a dishwasher according to a further embodiment of the present invention. After the processor 130 determines noise level of the measured turbidity signal in step S102, the processor 130 performs the further step S103 of comparing the noise level to at least one noise threshold value to determine the type of detergent present in the process water, wherein a particular type of detergent corresponds to a particular noise threshold value.

In a further embodiment of the present invention, the detergent detector 100 of Figure 1 determines, from the measured turbidity signal and/or the noise level of the measured turbidity signal, the amount of detergent dissolved in the process water.

Thus, a detergent detector 100 according to the present invention is advantageously implemented in a household appliance such as e.g. a dishwasher or a washing machine. In practice, the processor is arranged to execute a computer program 117 downloaded to a suitable storage medium 116 associated with the microprocessor, such as a RAM, a Flash memory or a hard disk. The processor 130 is arranged to at least partly carry out the method according to embodiments of the present invention when the appropriate computer program 117 comprising computer-executable components is downloaded to the memory 116 and executed by the processor 130. The storage medium 116 may be a computer program product comprising the computer program 117. Alternatively, the computer program 117 may be transferred to the storage medium 116 by means of a suitable computer program product, such as a memory stick. As a further alternative, the computer program 117 may be downloaded to the storage medium 116 over a network in case the appliance is arranged with such facilities. The processor 130 may alternatively be embodied in the form of an application specific integrated circuit (ASIC), a field-programmable gate array (FPGA), a complex programmable logic device (CPLD), etc. It should be noted that the detergent detector 100 of the present invention may employ a processor already available in the household appliance for carrying out the present invention.

In a further embodiment the present invention, water saving in a water consuming household appliance is achieved. This embodiment is based on the insight that a decision whether to save process water in a household appliance tank or not has to be taken based on the determined quality of that process water. This determination is done by comparing at least one turbidity sensor output value related to the type and amount of detergent dosed with a predetermined threshold value that is related to the quality of the process water, as has been described in the above. If the quality aspects on the process water are complied with, the process water to be stored is pumped to the tank. The quality aspects are mirrored by the predetermined threshold value that the measured values have to comply with. In this way, a method of handling process water from a rinse cycle in a household appliance performing washing and rinsing of goods is provided. By selectively storing at least a part of the process water with a determined quality from a rinse cycle, cold or hot, the risk of bad smell and bacteria proliferation is minimized for a defined period of time. Subsequently, the process water stored in the tank is reused in a following program cycle. An advantage with the method is that it would result in significant water saving of per performed wash program with a reduced risk to experience bad smell from the household appliance caused by bacteria proliferation in the tank.

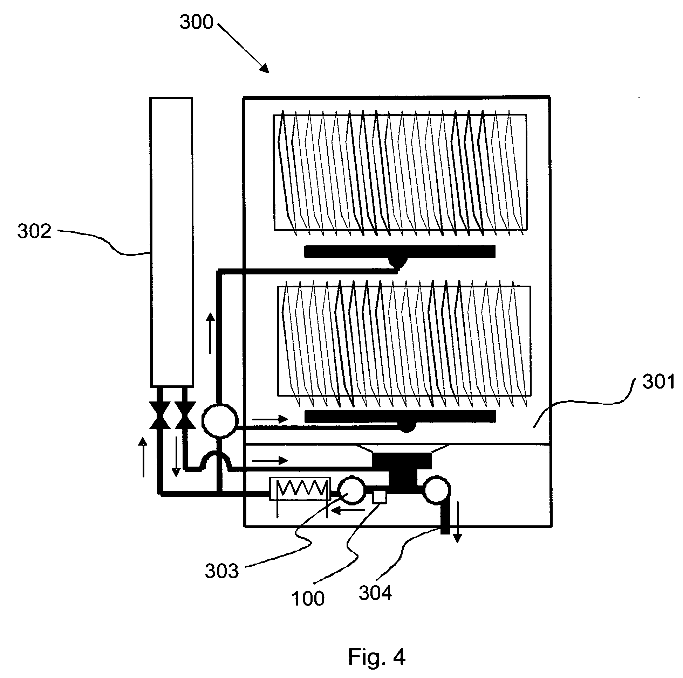

This embodiment is illustrated in Figure 4 showing a household appliance 300, i.e. a dishwasher. The dishwasher comprises a wash tub 301 for receiving goods to be washed therein. The dishwasher is provided with a tank 302 for storing at least a part of the rinse water from a cold rinse cycle and/or a hot rinse cycle. A detergent detector 100 as has been described in detail hereinabove is provided in the dishwasher to carry out measurements and/or detections on the process water in the appliance in order to detect the type of detergent being used. The detergent detector 100 may further measure the amount of detergent in the process water circulating in the household appliance 300. In an embodiment of the invention, the detergent dosed by the consumer is measured. This measurement is generally performed as soon as the main wash cycle has started, since it is at that point the detergent is released from the detergent container and then dissolves in the process water. The detergent detector 100 is positioned in the sump or in the piping just before or after the pump distributing the process water out to the wash arms in the wash tub.

The measuring or sensing may take place at certain occasions during a wash program or be a continuous process such that the turbidity and the noise level of the turbidity signal of the process water are constantly monitored. A determination takes place wherein the noise level of the measured turbidity signal and the amount of detergent dissolved in the process water stipulates whether the quality of the process water is adequate for reuse. For instance, the noise level of the turbidity signal indicates whether powder/tablets or liquid/gel detergents have been dissolved in the process water. If it is concluded that the type of detergent dissolved is powder or tablets, the measured amount of detergent is considered for determining whether the process water quality is adequate; if the measured amount exceeds an acceptance threshold value, the quality is regarded as adequate. Process water is then pumped by a pump 303 to the tank 302 for reuse in a following program cycle. Should the process water not be considered adequate, it is discarded through an outlet drain 304.

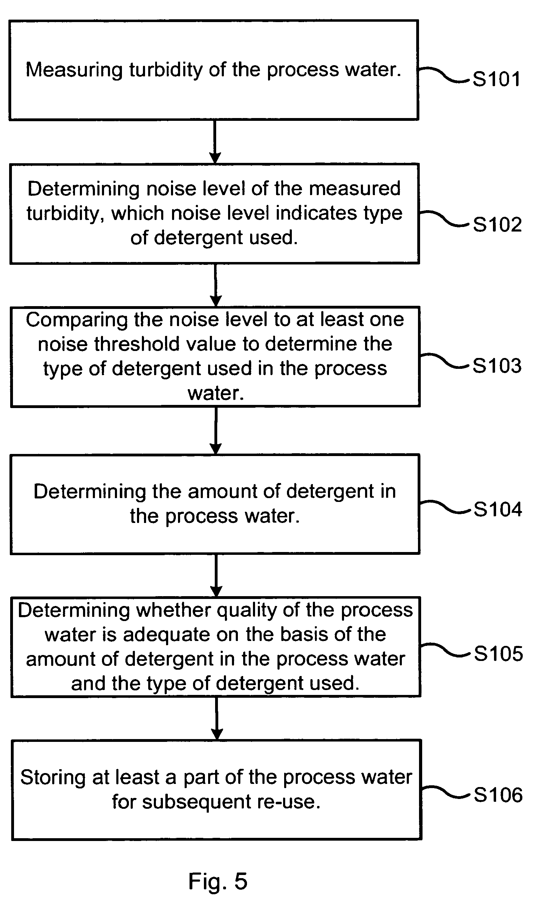

Figure 5 shows a flowchart illustrating a method of detecting detergent present in process water in a household appliance, such as a dishwasher, for the purpose of reusing process water according to an embodiment of the present invention. After the processor 130 determines noise level of the measured turbidity signal in step S102, and optionally after having performing the further step S103 of comparing the noise level to at least one noise threshold value to determine the type of detergent present in the process water, the microprocessor 130 further determines the amount of detergent in the process water in step S104 by analysing the turbidity and/or the noise level. Thereafter, in step S105, the processor 130 determines whether quality of the process water is adequate on the basis of the amount of detergent in the process water and the type of detergent present. If that is the case, at least a part of the process water is stored in step S106 for re-use in a following program cycle.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

## Claims

1. A method of detecting detergent present in process water in a household appliance for washing and rinsing goods, the method comprising the steps of:

   measuring (S101) turbidity of the process water, the measured turbidity signal indicating the presence of detergent in the process water; and
   determining (S102) noise level of the measured turbidity signal, which noise level indicates type of detergent present in the process water,

   **characterised in that** the step of determining (S102) noise level of the measured turbidity signal comprises:

   determining, over a specified time period, momentary turbidity value and average turbidity value of the process water, wherein the noise level is calculated as a difference value between the momentary turbidity value and average turbidity value over the specified time period.

2. The method of claim 1, wherein the turbidity of the process water is measured during a predetermined time period subsequent to an expected release of detergent into the process water.

3. The method of any one of the preceding claims, further comprising the step of:

   comparing (S103) the noise level to at least one noise threshold value to determine the type of detergent present in the process water, wherein a particular type of detergent corresponds to a particular noise threshold value.

4. The method of any one of the preceding claims, further comprising the step of:

   determining (S104) the amount of detergent in the process water.

5. The method of claim 4, further comprising the steps of:

   determining (S105) whether quality of the process water is adequate on the basis of the amount of detergent in the process water and the type of detergent present, and if so;
   storing (S106) at least a part of the process water for re-use in a following program cycle.

6. A device (100) for detecting detergent present in process water in a household appliance for washing and rinsing goods, the device comprising:

   a turbidity sensor (120) arranged to measure turbidity of the process water, the measured turbidity signal indicating the presence of detergent in the process water; and
   a processor (130) communicatively connected to the turbidity sensor, which processor is arranged to determine noise level of the measured turbidity signal, which noise level indicates type of detergent present in the process water

   **characterised in that** said processor (130) further being arranged to:

   determine, over a specified time period, momentary turbidity value and average turbidity value of the process water; and
   calculate the noise level as a difference value between the momentary turbidity value and average turbidity value over the specified time period.

7. The device (100) of claim 6, wherein the turbidity of the process water is measured during a predetermined time period subsequent to an expected release of detergent into the process water.

8. The device (100) of any one of claims 6-7, said processor (130) further being arranged to:

   compare the noise level to at least one noise threshold value to determine the type of detergent present in the process water, wherein a particular type of detergent corresponds to a particular noise threshold value.

9. The device (100) of any one of claims 6-8, said processor (130) further being arranged to:

   determine the amount of detergent in the process water.

10. The device (100) of claim 9, said processor (130) further being arranged to:

    determine whether quality of the process water is adequate on the basis of the amount of detergent in the process water and the type of detergent present, and if so;
    effect storage of at least a part of the process water for re-use in a following program cycle.

11. A dishwasher (300) comprising a device (100) for detecting detergent according to any of the claims 6 - 10.

12. A computer program (117) comprising computer-executable components for causing the device (100) for detecting detergent according to any of claims 6-10 to perform at least parts of steps recited in any one of claims 1-5 when the computer-executable components are run on a processing unit (130) included in the device.

13. A computer program product (116) comprising a computer readable medium, the computer readable medium having the computer program (117) according to claim 12 embodied therein.

**Patentansprüche**

1. Verfahren zum Nachweisen von Detergens, das in Prozesswasser in einem Haushaltsgerät zum Waschen und Spülen von Gegenständen vorhanden ist, wobei das Verfahren die Schritte umfasst:

    Messen (S101) der Trübung des Prozesswassers, wobei das gemessene Trübungssignal das Vorhandensein von Detergens in dem Prozesswasser anzeigt; und
    Bestimmen (S102) des Rauschpegels des gemessenen Trübungssignals, wobei der Rauschpegel den Typ von in dem Prozesswasser vorhandenem Detergens anzeigt,
    **dadurch gekennzeichnet, dass** der Schritt des Bestimmens (S102) des Rauschpegels des gemessenen Trübungssignals umfasst:

        über einen festgelegten Zeitraum Bestimmen des momentanen Trübungswerts und des mittleren Trübungswerts des Prozesswassers, wobei der Rauschpegel als Differenzwert zwischen dem momentanen Trübungswert und dem mittleren Trübungswert über den festgelegten Zeitraum berechnet wird.

2. Verfahren gemäß Anspruch 1, wobei die Trübung des Prozesswassers während eines festgelegten Zeitraums auf eine erwartete Freisetzung von Detergens in das Prozesswasser folgend gemessen wird.

3. Verfahren gemäß einem der vorstehenden Ansprüche, ferner umfassend den Schritt:

    Vergleichen (S103) des Rauschpegels mit wenigstens einem Rausch-Schwellenwert, um den Typ von in dem Prozesswasser vorhandenem Detergens zu bestimmen, wobei ein bestimmter Typ von Detergens einem bestimmten Rausch-Schwellenwert entspricht.

4. Verfahren gemäß einem der vorstehenden Ansprüche, ferner umfassend den Schritt:

    Bestimmen (S104) der Menge an Detergens in dem Prozesswasser.

5. Verfahren gemäß Anspruch 4, ferner umfassend die Schritte:

    Bestimmen (S105) auf der Grundlage der Menge an Detergens in dem Prozesswasser und des Typs von vorhandenem Detergens, ob die Qualität des Prozesswassers ausreichend ist, und wenn dies zutrifft, Aufbewahren (S106) wenigstens eines Teils des Prozesswassers für die Wiederverwendung bei einem nachfolgenden Programmzyklus.

6. Vorrichtung (100) zum Nachweisen von Detergens, das in Prozesswasser in einem Haushaltsgerät zum Waschen und Spülen von Gegenständen vorhanden ist, wobei die Vorrichtung umfasst:

    einen Trübungssensor (120), gestaltet zum Messen der Trübung des Prozesswassers, wobei das gemessene Trübungssignal das Vorhandensein von Detergens in dem Prozesswasser anzeigt; und
    einen Prozessor (130), der kommunizierend mit dem Trübungssensor verbunden ist, welcher Prozessor dafür gestaltet ist, den Rauschpegel des gemessenen Trübungssignals zu bestimmen, welcher Rauschpegel den Typ von in dem Prozesswasser vorhandenem Detergens anzeigt,
    **dadurch gekennzeichnet, dass** der Prozessor (130) ferner gestaltet ist zum:

        über einen festgelegten Zeitraum Bestimmen des momentanen Trübungswerts und des mittleren Trübungswerts des Prozesswassers; und
        Berechnen des Rauschpegels als Differenzwert zwischen dem momentanen Trübungswert und dem mittleren Trübungswert über den festgelegten Zeitraum.

7. Vorrichtung (100) gemäß Anspruch 6, wobei die Trübung des Prozesswassers während eines festgelegten Zeitraums auf eine erwartete Freisetzung von Detergens in das Prozesswasser folgend gemessen wird.

8. Vorrichtung (100) gemäß einem der Ansprüche 6-7, wobei der Prozessor (130) ferner gestaltet ist zum:

Vergleichen des Rauschpegels mit wenigstens einem Rausch-Schwellenwert, um den Typ von in dem Prozesswasser vorhandenem Detergens zu bestimmen, wobei ein bestimmter Typ von Detergens einem bestimmten Rausch-Schwellenwert entspricht.

9. Vorrichtung (100) gemäß einem der Ansprüche 6-8, wobei der Prozessor (130) ferner gestaltet ist zum:

Bestimmen der Menge an Detergens in dem Prozesswasser.

10. Vorrichtung (100) gemäß Anspruch 9, wobei der Prozessor (130) ferner gestaltet ist zum:

Bestimmen auf der Grundlage der Menge an Detergens in dem Prozesswasser und des Typs von vorhandenem Detergens, ob die Qualität des Prozesswassers ausreichend ist, und wenn dies zutrifft,
Bewirken von Aufbewahren wenigstens eines Teils des Prozesswassers für die Wiederverwendung bei einem nachfolgenden Programmzyklus.

11. Geschirrspüler (300), umfassend eine Vorrichtung (100) zum Nachweisen von Detergens gemäß einem der Ansprüche 6-10.

12. Computerprogramm (117), umfassend computerausführbare Komponenten zum Bewirken, dass die Vorrichtung (100) zum Nachweisen von Detergens gemäß einem der Ansprüche 6-10 wenigstens Teile der in einem der Ansprüche 1-5 genannten Schritte durchführt, wenn die computerausführbaren Komponenten auf einer Prozessoreinheit (130), die in der Vorrichtung enthalten ist, laufen gelassen werden.

13. Computerprogrammprodukt (116), umfassend ein computerlesbares Medium, wobei das computerlesbare Medium das Computerprogramm (117) gemäß Anspruch 12 enthält.

## Revendications

1. Procédé de détection d'un détergent présent dans de l'eau de traitement dans un appareil électroménager servant à laver et rincer des articles, le procédé comprenant les étapes consistant à :

mesurer (S101) la turbidité de l'eau de traitement, le signal de turbidité mesuré indiquant la présence de détergent dans l'eau de traitement ; et
déterminer (S102) le niveau de bruit du signal de turbidité mesuré, lequel niveau de bruit indique le type de détergent présent dans l'eau de traitement, **caractérisé en ce que** l'étape consistant à déterminer (S102) le niveau de bruit du signal de turbidité mesuré comprend :

la détermination, pendant un laps de temps spécifié, de la valeur de turbidité instantanée et de la valeur de turbidité moyenne de l'eau de traitement, le niveau de bruit étant calculé comme une valeur différentielle entre la valeur de turbidité instantanée et la valeur de turbidité moyenne pendant le laps de temps spécifié.

2. Procédé de la revendication 1, dans lequel la turbidité de l'eau de traitement est mesurée pendant un laps de temps prédéterminé consécutif à une libération prévue de détergent dans l'eau de traitement.

3. Procédé de l'une quelconque des revendications précédentes, comprenant en outre l'étape consistant à :

comparer (S103) le niveau de bruit à au moins une valeur seuil de bruit pour déterminer le type de détergent présent dans l'eau de traitement, un type particulier de détergent correspondant à une valeur seuil de bruit particulière.

4. Procédé de l'une quelconque des revendications précédentes, comprenant en outre l'étape consistant à :

déterminer (S104) la quantité de détergent dans l'eau de traitement.

5. Procédé de la revendication 4, comprenant en outre les étapes consistant à :

déterminer (S105) si la qualité de l'eau de traitement est adéquate sur la base de la quantité de détergent dans l'eau de traitement et du type de détergent présent, et si c'est le cas,
stocker (S106) au moins une partie de l'eau de traitement pour la réutiliser dans un cycle de programme suivant.

6. Dispositif (100) servant à détecter un détergent dans de l'eau de traitement dans un appareil électroménager servant à laver et rincer des articles, le dispositif comprenant :

un capteur de turbidité (120) configuré pour mesurer la turbidité de l'eau de traitement, le signal de turbidité mesuré indiquant la présence de détergent dans l'eau de traitement ; et
un processeur (130) communiquant avec le capteur de turbidité, lequel processeur est configuré pour déterminer le niveau de bruit du signal de turbidité mesuré, lequel niveau de bruit indique le type de détergent présent dans l'eau de traitement,

**caractérisé en ce que** ledit processeur (130) est également configuré pour :

déterminer, pendant un laps de temps spécifié, la valeur de turbidité instantanée et la valeur de turbidité moyenne de l'eau de traitement ; et
calculer le niveau de bruit comme une valeur différentielle entre la valeur de turbidité instantanée et la valeur de turbidité moyenne pendant le laps de temps spécifié.

7. Dispositif (100) de la revendication 6, dans lequel la turbidité de l'eau de traitement est mesurée pendant un laps de temps prédéterminé consécutif à une libération prévue de détergent dans l'eau de traitement.

8. Dispositif (100) de l'une quelconque des revendications 6 et 7, ledit processeur (130) étant également configuré pour :

comparer le niveau de bruit à au moins une valeur seuil de bruit pour déterminer le type de détergent présent dans l'eau de traitement, un type particulier de détergent correspondant à une valeur seuil de bruit particulière.

9. Dispositif (100) de l'une quelconque des revendications 6 à 8, ledit processeur (130) étant également configuré pour :

déterminer la quantité de détergent dans l'eau de traitement.

10. Dispositif (100) de la revendication 9, ledit processeur (130) étant également configuré pour :

déterminer si la qualité de l'eau de traitement est adéquate sur la base de la quantité de détergent dans l'eau de traitement et du type de détergent présent, et si c'est le cas ;
effectuer le stockage d'au moins une partie de l'eau de traitement pour la réutiliser dans un cycle de programme suivant.

11. Lave-vaisselle (300) comprenant un dispositif (100) servant à détecter un détergent selon l'une quelconque des revendications 6 à 10.

12. Programme informatique (117) comprenant des composantes exécutables par ordinateur pour amener le dispositif (100) servant à détecter un détergent selon l'une quelconque des revendications 6 à 10 à effectuer au moins des parties des étapes énumérées dans l'une quelconque des revendications 1 à 5 quand les composantes exécutables par ordinateur sont exécutées sur une unité de traitement (130) contenue dans le dispositif.

13. Produit-programme informatique (116) comprenant un support lisible par ordinateur, le support lisible par ordinateur ayant le programme informatique (117) selon la revendication 12 incorporé à l'intérieur.

Fig. 1

Fig. 2a

Fig. 2b

Fig. 2c

14

Measuring turbidity of the process water. — S101

Determining noise level of the measured turbidity, which noise level indicates type of detergent used. — S102

Fig. 3a

Measuring turbidity of the process water. — S101

Determining noise level of the measured turbidity, which noise level indicates type of detergent used. — S102

Comparing the noise level to at least one noise threshold value to determine the type of detergent used. — S103

Fig. 3b

Fig. 4

Measuring turbidity of the process water. — S101

Determining noise level of the measured turbidity, which noise level indicates type of detergent used. — S102

Comparing the noise level to at least one noise threshold value to determine the type of detergent used in the process water. — S103

Determining the amount of detergent in the process water. — S104

Determining whether quality of the process water is adequate on the basis of the amount of detergent in the process water and the type of detergent used. — S105

Storing at least a part of the process water for subsequent re-use. — S106

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2206457 A
- DE 10356279 A1
- DE 19745428 A1